**Europäisches Patentamt**

(19) **European Patent Office**

**Office européen des brevets**

(11) Veröffentlichungsnummer: **0 073 534**
**B1**

(12) EUROPÄISCHE PATENTSCHRIFT

(45) Veröffentlichungstag der Patentschrift:
**22.05.85**

(51) Int. Cl.⁴: **H 02 G  1/12**

(21) Anmeldenummer: **82200971.8**

(22) Anmeldetag: **29.07.82**

(54) **Abisoliergerät.**

(30) Priorität: **28.08.81  SE 8105096**

(43) Veröffentlichungstag der Anmeldung:
**09.03.83 Patentblatt 83/10**

(45) Bekanntmachung des Hinweises auf die Patenterteilung:
**22.05.85 Patentblatt 85/21**

(84) Benannte Vertragsstaaten:
**CH DE FR GB IT LI SE**

(56) Entgegenhaltungen:
**DE - C - 893 672**
**DE - C - 893 672**
**FR - A - 2 354 650**
**FR - A - 2 354 650**
**US - A - 3 537 350**
**US - A - 3 537 350**

(73) Patentinhaber: **C.A. Weidmüller GmbH & Co.,**
**Postfach 950 Paderborner Strasse 175,**
**D-4930 Detmold 14 (DE)**

(72) Erfinder: **Wiener, Hans, Drakskeppsvägen 10,**
**S-183 63 Täby (SE)**
Erfinder: **Undin, Hans, Stora Skogsrundan 55,**
**S-184 00 Akersberga (SE)**

(74) Vertreter: **Klauber, Tomas, Patentbyran Klauber & Co.**
**AB Kungsgatan 44, S-111 35 Stockholm (SE)**

# Beschreibung

Die Erfindung bezieht sich auf ein Abisoliergerät gemäss dem ersten Teil des Anspruches 1. Ein derartiges Abisoliergerät ist aus der DE-C Nr. 893672 bekannt und weist einen länglichen, handgriffartig ausgebildeten Gerätekörper auf, an dessen einer Stirnseite ein Messerhalter mit einem Abisoliermesser angeordnet ist. Am Gerätekörper ist ferner ein geradlinig verschiebbarer, am freien Ende dachkantförmig abgebogener Haltebügel für einen zu bearbeitenden isolierten Leiter runden Querschnitts vorgesehen. Der Messerhalter ist zylindrisch ausgebildet und in einer entsprechenden Längsbohrung im Gerätekörper verschiebbar und drehbar angeordnet.

Es sind ferner Abisoliergeräte für Koaxialkabel bekannt, die zwei oder drei in Längsrichtung des zu bearbeitenden Kabels in vorbestimmtem Abstand voneinander angeordnete Abisoliermesser enthalten, welche in verschiedenem Ausmass in die Isolationsschichten des Koaxialkabels eindringen, um verschieden tiefe Einschnitte zu schaffen, von denen der eine nur die äussere Isolationsschicht und der andere ausserdem noch sowohl die äussere Leiterschicht (Abschirmschicht) als auch die innere Isolationsschicht durchtrennt. Wenn drei Messer vorhanden sind, trennt ein zusätzlich zwischen dem ersten und dem zweiten Messer angeordnetes drittes Messer nur die äussere Isolationsschicht und die Abschirmschicht, nicht aber die innere Isolationsschicht durch (FR-A Nr. 2354650).

Der Erfindung liegt die Aufgabe zugrunde, ein Abisoliergerät der eingangs erwähnten Art weiter zu verbessern und insbesondere derart zu gestalten, dass es gleichermassen leicht zur Abmantelung von einadrigen und koaxialen Kabeln verwendet werden kann, wobei bei der Abmantelung von Koaxialkabeln sowohl zwei als auch drei Einstiche möglich sein sollen, auch dann, wenn die Entfernung zwischen den Einstichstellen grösser ist als die Dimension des Gerätekörpers in entsprechender Richtung. Diese Aufgabe wird erfindungsgemäss durch die kennzeichnenden Merkmale des Anspruches 1 gelöst. Die Erfindung bietet insbesondere die Vorteile, dass das Abisoliergerät je nach Bedarf für verschiedene Arten und Grössen von Leitern angewandt werden kann und dass ggf. auch Leiter mit schwer durchdringlicher Isolationsschicht zuverlässig an das oder die Abisoliermesser angedrückt werden. Vorteilhafte Ausgestaltungen der Erfindung sind Gegenstand der abhängigen Ansprüche.

Die Erfindung soll nun an Hand der Zeichnungen, die beispielsweise Ausführungsformen darstellen, näher erläutert werden. Hierbei zeigen:

Fig. 1 eine erste Ausführungsform des erfindungsgemässen Gerätes in Vorderansicht,

Fig. 2 den Messerkopf des Gerätes gemäss Fig. 1 im Schnitt, mit einem zu bearbeitenden eingelegten Koaxialkabel,

Fig. 3 den Messerkopf des Gerätes gemäss Fig. 1 in Draufsicht,

Fig. 4 den Haltebügel des Gerätes gemäss Fig. 1 in Draufsicht in Richtung des Pfeiles H in Fig. 2, wobei zwei alternative Ausführungsformen der freien Kante des Haltebügels dargestellt sind,

Fig. 5 eine zweite Ausführungsform des erfindungsgemässen Gerätes in Vorderansicht, und

Fig. 6a u. 6b zwei Arten der Abmantelung von Koaxialkabeln.

Teile mit gleicher Funktion sind in allen Zeichnungsfiguren mit gleichen Bezugszeichen bezeichnet.

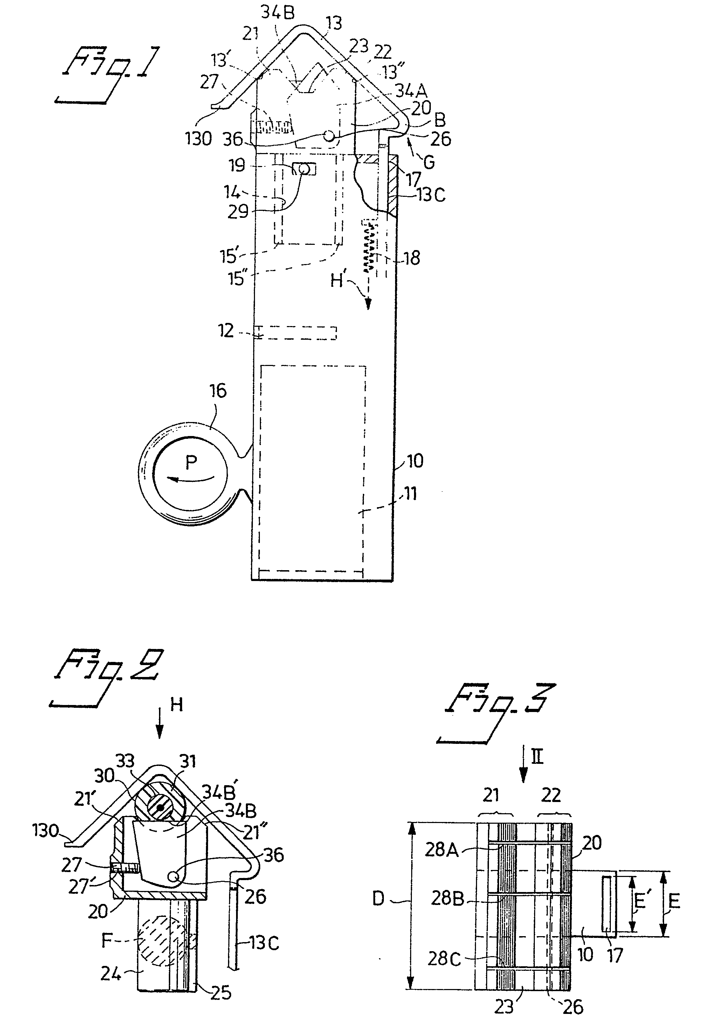

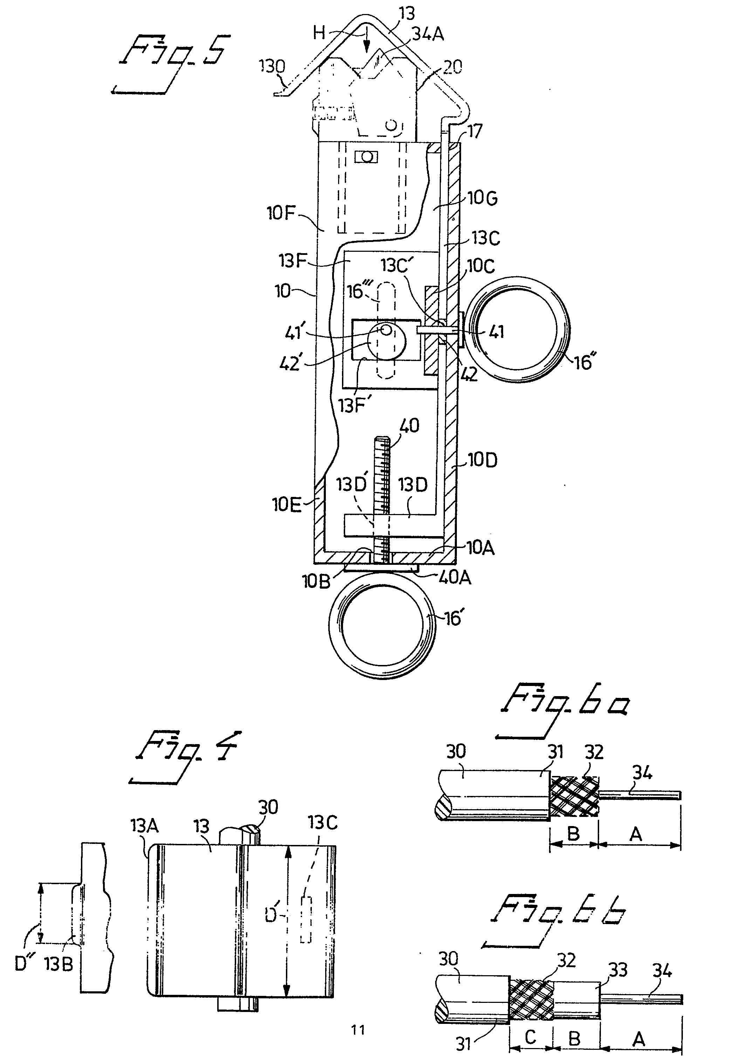

Gemäss den Fig. 1 bis 3 ist in einem Gerätekörper 10 ein dachkantförmig gestalteter Haltebügel 13, der durch eine Öffnung 17 hindurchgeht, geradlinig verschiebbar angeordnet und wird im Inneren des Gerätekörpers 10 dauernd von einer Zugfeder 18 mit vorgewählter Kraft in Richtung des Pfeiles H' beaufschlagt. Die Pfeile H (Fig. 2, 5) und H' bezeichnen die Anziehrichtung des Haltebügels 13. Zur Einlegung eines Leiters 30 (Fig. 2) in das Gerät zwecks Bearbeitung wird der Haltebügel 13 mit der Hand an der Stelle B im Sinne des Pfeiles G angehoben.

Erfindungsgemäss ist auf den Gerätekörper 10 ein leicht ein- und ausbaubarer, separater Messerkopf 20 aufgesteckt. Der Messerkopf 20 weist an seinem in der Zeichnung unteren Ende ein Eingriffsorgan in der Form eines zylindrischen Führungszapfens 24 mit Querschnitt F auf, an den sich an einer Stelle seines Umfanges eine geradlinige Führungsleiste 25 anschliesst. In dem in der Zeichnung oberen Ende des Gerätekörpers 10 ist eine zylindrische Bohrung 14 zur Aufnahme des Führungszapfens 24 angeordnet, an die sich an zwei um 180° versetzten Umfangsstellen geradlinige Kerben 15′, 15″ für die Aufnahme der Führungsleiste 25 anschliessen. Der Messerkopf 20 kann somit in zwei um 180° versetzten Lagen in den Gerätekörper 10 eingeführt werden und wird darin derart festgehalten, dass ein im Führungszapfen 24 eingebauter federnder Vorsprung 29, der z.B. vom Innern des Führungszapfens federbelastet ist, in eine Einkerbung oder Öffnung 19 in der Wand des Gerätekörpers einrastet. Die gleiche Öffnung ist auch in der nicht sichtbaren, gegenüberliegenden Wand bzw. Seitenwand angeordnet.

An seinem dem Führungszapfen 24 entgegengesetzten Ende weist der Messerkopf 20 ein Auflager für den zu bearbeitenden Leiter 30 auf. Dieses Auflager enthält zwei mit Abstand zueinander liegende, erhöhte Randgebiete 21, 22, zwischen denen sich eine Tiefenzone 23 befindet. Die erhöhten Randgebiete 21, 22 und die Tiefenzone 23 erstrecken sich geradlinig in Richtung des einzulegenden Leiters, d.h. senkrecht zur Zeichnungsebene von den Fig. 1 und 2, wie dies in Fig. 3 ersichtlich ist. Die Tiefenzone 23 ist an ihren beiden Endstellen offen.

Im Messerkopf 20 sind ein, zwei oder drei geradlinige Einkerbungen 28A, 28B, 28C für die Aufnahme je eines Abisoliermessers 34A oder 34B angeordnet. Ein Messerkopf mit einem Einschnitt und einem Abisoliermesser dient zur Bearbeitung von einadrigen Kabeln, und ein Messerkopf mit zwei Einschnitten und zwei Abisoliermessern dient zur Bearbeitung von Koaxialkabeln, wenn die Abmantelung auf die in Fig. 6a dargestellte Art erfolgen soll. In Fig. 6a ist ein Koaxialkabel (Leiter 30) dargestellt, das eine äussere Isolationsschicht 31, eine leitende Abschirmschicht 32, eine unter dieser gelegene (und nur in Fig. 6b sichtbare) innere Isolationsschicht 33 und schliesslich einen Mittelleiter 34 enthält. Bei der Abmantelung wurden durch einen ersten Trennschnitt in der Entfernung A vom Leiterende alle Schichten bis auf den Mittelleiter 34 durchschnitten, und durch einen zweiten Schnitt in der Entfernung A+B vom Leiterende wurde bloss die äussere Isolationsschicht durchschnitten, wonach alle abgetrennten Teile vom Leiter abgezogen wurden. Eine derartige Abisolierung kann beim erfindungsgemässen Gerät, z.B. mit dem Messerkopf gemäss Fig. 3, durchgeführt werden, indem eine der Einkerbungen 28A, 28B, 28C unbestückt bleibt oder es kann ein separater Messerkopf mit nur zwei Einkerbungen vorgesehen werden.

Ein Messerkopf mit drei Abisoliermessern dient zur Abmantelung gemäss Fig. 6b, wo ein erster Einschnitt (in der Entfernung A) wie vorher beim Mittelleiter 34 endet, ein zweiter Einschnitt (in Entfernung A+B) vor der inneren Isolationsschicht 33 und ein dritter Einschnitt (in Entfernung A+B+C) vor der Abschirmschicht 32 endet (wie dies in Fig. 6a bei A+B der Fall war). Für diese Bearbeitungsart werden alle drei Einkerbungen 28A, 28B, 28C im Messerkopf 20 mit Abisoliermessern bestückt.

Aus dem Gesagten geht hervor, dass verschiedene Abisolieraufgaben durch verschiedene Bestückung eines und desselben Messerkopfes 20 gelöst werden können. In der Praxis ist es jedoch bequemer, wenn der ganze Messerkopf ausgetauscht wird. Dies ist ausserdem auch dann geboten, wenn bald die eine, bald die andere Art gefordert wird, und/oder wenn bei der gleichen Art mehrere verschiedene Längen A, B und ggf. C benötigt werden.

Ein Messerkopf für ein einziges Abisoliermesser braucht den als Stiel bzw. Halter ausgebildeten Gerätekörper 10 an keiner Stelle zu überragen. Bei der Abisolierung von Koaxialkabeln, insbesondere gemäss Fig. 6b, ist jedoch manchmal eine längere gesamte Abisolierstrecke (A+B bzw. A+B+C) erwünscht, als sie den normalen Abmessungen des Gerätekörpers (Breite E, Fig. 3) entspricht, wenn er bequem in der Hand gehalten werden soll. Aus Fig. 3 ist ersichtlich, dass bei der erfindungsgemässen Lösung ein separater Messerkopf ohne weiteres mit seiner Breite D in Richtung des eingelegten Kabels die Breite E des Gerätekörpers an einem Ende oder an beiden Enden in gewünschtem Ausmass überragen kann und somit jede erwünschte Abmantelungslänge am Kabel ermöglicht.

Im Gerätekörper 10 können zweckmässigerweise ein Verwahrungsraum 11 für einen Austauschmesserkopf und ein Verwahrungsraum 12 für Reservemesser vorgesehen werden. Alternativ kann der Gerätekörper bedeutend kürzer, als in Fig. 1 dargestellt, ausgeführt werden. Vorzugsweise wird am Gerät, z.B. am unteren Ende des Gerätekörpers 10, ein Auge 16 angeordnet, durch das der Finger der einen Hand hindurchgeführt werden kann, um das Gerät im Sinne des Pfeiles P leicht um einen eingelegten Leiter herum drehen zu können zwecks Verlängerung des oder der Einstiche.

Fig. 2 ist ein Schnitt durch den Messerkopf 20 gemäss Fig. 1 in der Ebene der Einkerbung 28A (Fig. 3), betrachtet in Richtung des Pfeiles II in Fig. 3. Das in der Einkerbung 28A eingelegte Abisoliermesser 34B hat eine geradlinige Schneidkante 34B', welche im wesentlichen senkrecht zur Verschieberichtung H des Haltebügels 13 verläuft. Das Abisoliermesser 34B ist für den Einschnitt bei A+B in Fig. 6a bzw. A+B+C oder A+B in Fig. 6b bestimmt. An seinem von der Schneidkante 34B' entfernten Ende ist das Abisoliermesser 34B mit einer Öffnung 36 versehen, durch welche ein Haltezapfen 26 hindurchgeht, der leicht in den Messerkopf 20 einführbar und leicht herausnehmbar ist. Auch alle übrigen Abisoliermesser haben an entsprechender Stelle eine derartige Öffnung, so auch z.B. das Abisoliermesser 34A in Fig. 1, welches eine Spitze aufweist, die näher dem einen Randgebiet 22 als dem anderen Randgebiet 21 liegt.

An einer Stelle, die oberhalb des Haltezapfens 26 liegt, d.h. näher zur Schneidkante des jeweiligen Abisoliermessers als zur Öffnung 36 und zum Haltezapfen 26, ist im Messerkopf 20 gegenüber jeder Einkerbung 28A, 28B, 28C jeweils eine Einstellschraube 27 in einer Gewindeöffnung 27' eingeschraubt. Beim Anziehen dieser Einstellschraube wird das betreffende Abisoliermesser etwas verdreht, was zur Folge hat, dass die Schneidkante etwas mehr aus der Tiefenzone herausragt und folglich etwas tiefer in einen eingelegten Leiter eindringt. Lockern der Einstellschraube hat entgegengesetzte Wirkung, so dass durch Manipulation mit den Einstellschrauben 27 eine Feineinstellung der Abisoliermesser durchgeführt werden kann.

Der Haltebügel 13 hat im wesentlichen die gleiche Breite D' (Fig. 4) wie die (Breite D, Fig. 3) des Messerkopfes 20, bzw. die des breitesten, einem Gerät zugehörenden Messerkopfes, wobei natürlich der Führungsarm 13C (Fig. 2) des Haltebügels 13, der in das Gehäuse 10 eingeschoben wird, eine der Öffnung 17 (Fig. 3) im Gerätekörper entsprechende Breite E' hat.

Vorzugsweise sind die oberen äusseren Flächen 21', 21'' des Messerkopfes 20 gleichförmig abgeschrägt wie die benachbarten Innenflächen 13', 13'' des dachkantförmigen Haltebügels 13. Der Messerkopf wird dadurch in der in Fig. 1 dargestellten Ruhelage vom Haltebügel 13 wirksam an den Gerätekörper 10 angepresst, und in Arbeitslage gemäss Fig. 2 geschieht das gleiche über den eingelegten, zu bearbeitenden Leiter. Das früher erwähnte Sicherungsorgan 19, 29 kann somit auch entfallen. Die genannte Formgestaltung hat natürlich auch den Zweck, eine grössere Annäherung des Haltebügels 13 an den Messerkopf 20 zu ermöglichen, um auch Kabel mit kleinerem Querschnitt bearbeiten zu können.

Die durch die Rundschnitte abgetrennten Isolationsteile müssen zwecks müheloser Abstreifung vom Leiter des öfteren der Länge nach angeschnitten werden. Zweckmässigerweise wird zu diesem Zwecke die freie Kante 13A des Haltebügels 13 erfindungsgemäss derart gestaltet, dass sie sich im Querschnitt bzw. in Seitenansicht verjüngt und etwas nach aussen ausgebogen ist, wie in den Fig. 1, 2 und 5 an der Stelle 130 dargestellt ist, in Draufsicht jedoch nicht in eine Spitze ausläuft, sondern entweder entlang der ganzen Breite D' oder zumindest entlang eines Teiles D'' dieser Breite geradlinig ist, wie in Fig. 4 an der Kante 13A bzw. alternativ an der kürzeren Kante 13B gezeigt ist.

In der Ausführungsform gemäss Fig. 5 wird der Führungsarm 13C des Haltebügels 13 im Inneren des Gerätekörpers 10, der einen Boden 10A und Seitenwände 10D, 10E, 10F und 10G aufweist, zwischen der Innenfläche der Seitenwand 10D und einer ihr gegenüberliegenden Zwischenwand 10C gleitend geführt. In Fig. 5 sind gleichzeitig drei verschiedene Lösung einer unnachgiebigen, d.h. nichtelastischen (zum Unterschied von der Zugfeder 18 in Fig. 1) Anpressung des Haltebügels an einen eingelegten Leiter dargestellt, wobei in der Praxis natürlich immer nur die eine oder die andere der Lösungen zur Anwendung bei einem Gerät gelangt.

Gemäss einer ersten Alternative ist an das untere Ende des Führungsarmes 13C ein Querarm 13D mit einer Gewindeöffnung 13D' starr angeschlossen. In diese Gewindeöffnung ist eine Anziehschraube 40 einschraubbar, die frei durch eine gewindelose Öffnung 10B im Bode 10A des Gerätekörpers 10 hindurchgeht. Ausserhalb des Gerätekörpers 10 weist die Anziehschraube 40 einen Flansch oder Kragen 40A auf, der grösseren Durchmesser als die Öffnung 10B hat, und ist ferner mit einem Betätigungsorgan 16' versehen, welches dem Auge 16 gleicht und im gleicher Weise auf den Finger aufgesteckt werden kann. Nach dem Einlegen eines abzuisolierenden Leiters ins Gerät, zwischen das Abisoliermesser 34A und den Haltebügel 13, wird die Anziehschraube 40 nach Bedarf angezogen, bis der Leiter vollkommen auf dem Auflager liegt, wobei das oder die Abisoliermesser bis zur vorgesehenen Tiefe in die Isolationsschicht des Leiters eindringen.

Gemäss einer zweiten Alternative sind in der einen Seitenwand 10D und in der Zwischenwand 10C Öffnungen für die drehbare Lagerung eines Achsenstumpfes 41 angeordnet und im Führungsarm 13C ist ein Fenster 13C' (ähnlich dem später zu beschreibenden Fenster 13F') angeordnet. Ein Exzenternocken 42 ist drehfest am Achsenstumpf 41 und drehbar im Fenster 13C' angeordnet. Der Achsenstumpf 41 trägt an der Aussenseite des Gerätekörpers 10 ein Betätigungsorgan 16'', welches dem Betätigungsorgan 16' gleicht. Durch eine höchstens 180° umfassende Drehung des Exzenternockens 42 wird der Haltebügel 34 wie im vorhergehenden Falle angezogen.

Die dritte Variante unterscheidet sich hiervon dadurch, dass der Achsenstumpf 41' mit dem Betätigungsorgan 16''' und dem Exzenternocken 42' in den beiden Seitenwänden 10F und 10G drehbar gelagert ist. Dies erfordert, dass das Fenster 13F' für den Eingriff dieses Exzenternockens in einer an den Führungsarm 13C starr angeschlossenen und mit den genannten Seitenwänden parallelen Platte 13F angeordnet wird. Vorteil dieser Lösung gegenüber der ersten und der zweiten Lösung ist, dass die beiden anderen Seitenwände 10D und 10E und somit auch der ganze Gerätekörper 10 ziemlich schmal gehalten werden können. Die Anziehschraube 40 und die Exzenternocken 42, 42' werden nach bekannten Prinzipien selbsthemmend ausgeführt. Die Eingriffskanten der Exzenternocken 42, 42' und/oder der Fenster 13C', 13F' können auch mit reibungsfördernden Mitteln, beispielsweise Querrillen oder Querriefen versehen werden.

Es ist zu beachten, dass bei allen drei erwähnten Alternativen die von der Hand der Bedienungsperson geleistete Anziehkraft nach Wahl geändert, insbesondere verstärkt werden kann, indem die Gewindesteigung der Anziehschraube 40 bzw. Exzentrizität und/oder Umfangsform der Exzenternocken 42, 42' entsprechend gewählt wird.

Die in der Zeichnung dargestellte kreisrunde Form des Exzenternockens ist bloss als ein Ausführungsbeispiel zu betrachten.

Die Varianten gemäss Fig. 5 eignen sich insbesondere zur Bearbeitung von Leitern, die schwer durchdringliche (zähe, dicke) Isolationsschichten aufweisen.

Im Rahmen der Erfindung sind zahlreiche weitere Variationen möglich. So kann z.B. der Messerkopf mittels einer Schwalbenschwanzführung von der Seite her auf den Gerätekörper aufgeschoben werden, und das Auflager und/oder der Haltebügel können eine andere als die beispielsweise dargestellte Form aufweisen. Ferner kann die Führungsleiste 25 z.B. durch einen Führungsstift ersetzt werden, oder die drehfeste Lagerung des Messerkopfes 20 im Gerätekörper 10 mit der Möglichkeit zweier verschiedener Drehlagen kann auf andere Weise erreicht werden, beispielsweise durch Schlitze im Führungszapfen 24 und Eingriffsmittel in der Aufnahmebohrung 14 oder mittels viereckiger Querschnittsform des Führungszapfens 24 und der Bohrung 14. Der Messerkopf und der Gerätekörper können natürlich auch zur gegenseitigen Verbindung in einer einzigen Drehlage angeordnet sein, beispielsweise durch Entfallen einer der Kerben 15', 15''.

## Patentansprüche

1. Abisoliergerät mit einem länglichen, handgriffartig ausgebildeten Gerätekörper (10) mit einer axialen Bohrung (14) zur Aufnahme eines Messerhalters (20), der zumindest ein Abisoliermesser (34A, 34B) trägt, und mit einem am Gerätekörper (10) angeordneten, geradlinig verschiebbaren, am freien Ende dachkantförmig abgebogenen Haltebügel (13) für einen zu bearbeitenden isolierten Leiter (30) runden Querschnitts, dadurch gekennzeichnet, dass der Messerhalter (20) als austauschbarer Messerkopf gestaltet ist, der an seinem dem Gerätekörper (10) zugewandten Ende ein vorstehendes Eingriffsorgan (24, 25) zur leicht ausbaubaren, aber in festgelegter Lage drehfesten Verbindung mit dem Gerätekörper (10) aufweist und an seinem dem Eingriffsorgan (24, 25) entgegengesetzten Ende mit einem zwei mit Abstand zueinander liegende, in Richtung des einzulegenden Leiters sich erstreckende, geradlinige erhöhte Randgebiete (21, 22) und eine zwischen diesen verlaufende geradlinige Tiefenzone (23) aufweisenden Auflager für den zu bearbeitenden Leiter (30) versehen ist, wobei das oder die Abisoliermesser (34A, 34B) mit der Dicke der abzutrennenden Isolationsteile entsprechender Tiefe in die Tiefenzone (23) hineinragen und die axiale Bohrung (14) als ein eine Drehbewegung ausschliessende Aufnahmeorgan (14, 15, 15') für das Eingriffsorgan des Messerkopfes (20) gestaltet ist.

2. Abisoliergerät nach Anspruch 1, dadurch gekennzeichnet, dass zur Abisolierung von Koaxialkabeln im Messerkopf (20) zumindest zwei in Richtung der geradlinig gestalteten Randgebiete (21, 22) voneinander entfernte, senkrecht zu diesen angeordnete, in unterschiedlich wählbarer Tiefe in die Tiefenzone zwischen den Randgebieten (21, 22) hineinragende Abisoliermesser (34A, 34B) vorgesehen sind.

3. Abisoliergerät nach Anspruch 2, dadurch gekennzeichnet, dass im Messerkopf (20) für die Aufnahme eines jeden Abisoliermessers (34A, 34B) je eine geradlinige, senkrecht zu den geradlinigen Randgebieten (21, 22) verlaufende Einkerbung (28A, 28B, 28C) vorgesehen ist.

4. Abisoliergerät nach einem der Ansprüche 1 bis 3, dadurch gekennzeichnet, dass zur Festhaltung des oder der Abisoliermesser (34A, 34B) im Messerkopf (20) ein Haltezapfen (26) und in jedem Abisoliermesser (34A, 34B) eine Öffnung (36) für die Aufnahme des Haltezapfens (26) vorgesehen ist.

5. Abisoliergerät nach einem der Ansprüche 1 bis 4, dadurch gekennzeichnet, dass am Messerkopf (20) für jedes Abisoliermesser (34A, 34B) ein Einstellorgan zur genauen Lageeinstellung vorgesehen ist.

6. Abisoliergerät nach Anspruch 5, dadurch gekennzeichnet, dass die Einstellorgane aus im Messerkopf (20) eingeschraubten Einstellschrauben (27) bestehen, welche das jeweilige Abisoliermesser (34A, 34B) an einer Stelle angreifen, die näher der Tiefenzone als der Öffnung (36) für die Aufnahme des Haltezapfens (26) liegt.

7. Abisoliergerät nach einem der Ansprüche 1 bis 6, dadurch gekennzeichnet, dass zumindest eines der Abisoliermesser (34B) eine geradlinige, im wesentlichen senkrecht zur Verschieberichtung des Haltebügels (13) verlaufende Schneidkante aufweist.

8. Abisoliergerät nach einem der Ansprüche 1 bis 7, dadurch gekennzeichnet, dass zumindest eines der Abisoliermesser (34A) eine Spitze aufweist, die näher dem einen Randgebiet (22) als dem anderen Randgebiet (21) in das Auflager hineinragt.

9. Abisoliergerät nach einem der Ansprüche 1 bis 8, dadurch gekennzeichnet, dass das Eingriffsorgan (24, 25) des Messerkopfes (20) und das Aufnahmeorgan im Gerätekörper (10) zwei um 180° gegeneinander versetzte Lagen des Messerkopfes (20) und des Gerätekörpers (10) zulassen.

10. Abisoliergerät nach einem der Ansprüche 2 bis 9, dadurch gekennzeichnet, dass der Messerkopf (20) in Richtung eines eingelegten Koaxialkabels grössere Breite (D) aufweist als der Gerätekörper (10).

11. Abisoliergerät nach einem der Ansprüche 1 bis 10, dadurch gekennzeichnet, dass der Messerkopf (20) in seinem dem dachkantförmig ausgebildeten Haltebügel (13) zugewandten Teil (21', 21'') eine diesem komplementäre Form aufweist.

12. Abisoliergerät nach einem der Ansprüche 1 bis 11, dadurch gekennzeichnet, dass der Haltebügel (13) mit einem länglichen Führungsarm (13C) versehen ist, an dem ein von aussen her bedienbares, starres Anziehorgan (40; 42; 42') zum unnachgiebigen Anpressen des Haltebügels (13) an einen ins Gerät eingelegten Leiter (31) angreift, das im Inneren des Gerätekörpers (10) mit dem Führungsarm (13C) in zügig veränderlichem, nichtelastischem und selbsthemmendem Eingriff steht.

13. Abisoliergerät nach Anspruch 12, dadurch gekennzeichnet, dass das mechanische Anziehorgan eine in Anziehrichtung (H) verlaufende Anziehschraube (40) ist, die mit einer an den Führungsarm (13C) angeschlossenen, in gleicher Richtung verlaufenden Gewindeöffnung (13D') zusammenarbeitet.

**Claims**

1. Wire-stripping tool with an elongate handle-like-shaped tool body (14) having an axial bore for the accommodation of a knife holder (20) carrying at least one stripping knife (34A, 34B), and with a retaining yoke (13) for an insulated conductor (30) with circular cross-section which has to be treated, said yoke being arranged at the tool body (10) for rectilinear translation and at its free end is bent to roof-shape, characterised by the knife holder (20) being embodied by an exchangeable knife head which at the end turned towards the tool body (10) is provided with a projecting engagement means (24, 25) for a readily dismountable, but in a determined position non-rotational connection with tool body (10), and at the end which is opposite to the engagement means (24, 25) is provided with a support for the conductor (30) to be treated, said support comprising two spaced, rectilinear, elevated marginal zones (21, 22) extending in the direction of the conductor to be inserted, and a depressed zone (23) extending between them, the stripping knife or knives (34A, 34B) projecting into the depressed zone (23) to a depth corresponding to the thickness of the parts which have to be stripped off, and the axial bore (14) defines a receiving means (14, 15, 15') for the engagement means of the knife head (20) preventing rotational movement.

2. The stripping tool of Claim 1, characterised by the fact that for stripping coaxial cables there are provided in the knife head (20) at least two stripping knives (34A, 34B) spaced from one another in the direction of the rectilinearily shaped marginal zones (21, 22) and extending at right angles thereto, and which project into the depressed zone between the marginal zones (21, 22) to a selectively different depth.

3. The stripping tool of Claim 2, characterised by a rectilinear notch (28A, 28B, 28C), extending at right angles to the rectilinear marginal zones (21, 22), being provided in the knife head (20) for the accommodation of each stripping knife (34A, 34B).

4. The stripping tool according to one of the Claims 1 to 3, characterised by a retainer bolt being provided in the knife head (20) for retaining the stripping knife or knives (34A, 34B) and an opening (36) for the accommodation of the retainer bolt being provided in each stripping knife (34A, 34B).

5. The stripping tool according to one of the Claims 1 to 4, characterised by a setting means for precise position adjustment being provided in the knife head (20) for each stripping knife (34A, 34B).

6. The stripping tool of Claim 5, characterised by the setting means being defined by setting screws (27) screwed into the knife head (20) and engaging the respective stripping knife (34A, 34B) at a location lying closer to the depressed zone than to the opening (36) for the accommodation of the retainer bolt (26).

7. The stripping tool according to one of the Claims 1 to 6, characterised by at least one of the stripping knives (34B) having a straigth cutting edge extending essentially at right angles to the direction of translation of the retainer yoke (13).

8. The stripping tool according to one of the Claims 1 to 7, characterised by at least one of the stripping knives (34A) having a point which projects into the bearing closer to one marginal zone (22) than to the other marginal zone (21).

9. The stripping tool according to one of the Claims 1 to 8, characterised by the fact that the engagement means (24, 25) of the knife head (20) and the receiving means in the tool body (10) allow for relative positions of the knife head (20) and the tool body (10) which differ by 180° from one another.

10. The stripping tool according to one of the Claims 2 to 9, characterised by knife head (20) having in the direction of an inserted coaxial cable greater width (D) than the tool body.

11. The stripping tool according to one of the Claims 1 to 10, characterised by knife head (20) being in its part (21', 21") turned towards the roof-shaped retainer yoke (13) cofigurative with the yoke.

12. The stripping tool according to one of the Claims 1 to 11, characterised by the retainer yoke (13) being provided with an elongate guiding arm (13C) which is affected by a rigid, from the outside operable tightening means (40; 42; 42') for non-resilient clamping of the retainer yoke (13) onto a conductor (31) inserted into the tool, said tightening means affecting the guiding arm (13C) inside the tool body (10) with a steadily variable, non-resilient and self-retaining engagement.

13. The stripping tool according to Claim 12, characterised by the mechanical tightening means being defined by a tightening screw (40) extending in the direction of tightening (H) and cooperating with a threaded opening (13D') extending in the same direction and connected to the guiding arm (13C).

## Revendications

1. Appareil d'enlèvement d'isolation comportant un corps (10) allongé en forme de poignée, pourvu d'un alésage axial (14) pour recevoir un porte-lame (20), qui porte au moins une lame d'enlèvement d'isolation (34A, 34B), ainsi qu'un étrier de retenue (13), disposé sur le corps d'appareil (10), pouvant se déplacer en ligne droite, plié en forme de faîte de toiture à son extrémité libre et recevant un conducteur isolé (30) de section circulaire à traiter, caractérisé en ce que le porte-lame (20) est agencé comme une tête porte-lame amovible qui comporte, à son extrémité tournée vers le corps d'appareil (10), un organe d'accrochage en saillie (24, 25) destiné à être relié de façon facilement séparable, mais sans pouvoir tourner dans une position fixe, avec le corps d'appareil (10) et qui est pourvu, à son extrémité opposée à l'organe d'accrochage (24, 25), d'un support pour le conducteur à conditionner (30), comportant deux zones marginales rectilignes en saillie (21, 22), espacées l'une de l'autre et s'étendant dans la direction du conducteur inséré, ainsi qu'une zone en creux (23) rectiligne et disposée entre les zones précitées, la ou les lames d'enlèvement d'isolation (34A, 34B) pénétrant dans la zone en creux (23) sur la profondeur correspondant à l'épaisseur des parties d'isolation à enlever, et l'alésage axial (14) étant agencé comme un organe (14, 15, 15') interdisant un mouvement de rotation et servant à recevoir l'organe d'accrochage de la tête porte-lame (20).

2. Appareil d'enlèvement d'isolation selon la revendication 1, caractérisé en ce que, pour enlever l'isolation de câbles coaxiaux, il est prévu dans la tête porte-lame (20) au moins deux lames d'enlèvement d'isolation (34A, 34B) espacées l'une de l'autre en direction des zones marginales rectilignes (21, 22), disposées perpendiculairement à celles-ci, et pénétrant sur des profondeurs pouvant être choisies à la demande dans la zone en creux située entre les zones marginales (21, 22).

3. Appareil d'enlèvement d'isolation selon la revendication 2, caractérisé en ce qu'il est prévu, dans la tête porte-lame (20), pour la réception de chaque lame d'enlèvement d'isolation (34A, 34B), respectivement une encoche rectiligne (28A, 28B, 28C) orientée perpendiculairement aux zones marginales rectilignes (21, 22).

4. Appareil d'enlèvement d'isolation selon une des revendications 1 à 3, caractérisé en ce que, pour fixer en position la ou les lames d'enlèvement d'isolation (34A, 34B) dans la tête porte-lame (20), il est prévu un tourillon de retenue (26) et, dans chaque lame d'enlèvement d'isolation (34A, 34B), une ouverture (36) de réception du tourillon de retenue (26).

5. Appareil d'enlèvement d'isolation selon une des revendications 1 à 4, caractérisé en ce qu'il est prévu sur la tête porte-lame (20), pour chaque lame d'enlèvement d'isolation (34A, 34B), un organe de réglage servant à un réglage précis de position.

6. Appareil d'enlèvement d'isolation selon la revendication 5, caractérisé en ce que les organes de réglage sont constitués par des vis de réglage (27) vissées dans la tête porte-lame (20) et qui s'appliquent sur la lame d'enlèvement d'isolation respective (34A, 34B) en un endroit qui est plus rapproché de la zone en creux que de l'ouverture (36) de réception du tourillon de retenue (26).

7. Appareil d'enlèvement d'isolation selon une des revendications 1 à 6, caractérisé en ce qu'au moins une des lames d'enlèvement d'isolation (34B) comporte une arête de coupe rectiligne, orientée sensiblement perpendiculairement à la direction de translation de l'étrier de retenue (13).

8. Appareil d'enlèvement d'isolation selon une des revendications 1 à 7, caractérisé en ce qu'au moins une des lames d'enlèvement d'isolation (34A) comporte une partie acérée qui pénètre dans le support dans une position plus rapprochée d'une zone marginale (22) que de l'autre zone marginale (21).

9. Appareil d'enlèvement d'isolation selon une des revendications 1 à 8, caractérisé en ce que l'organe d'accrochage (24, 25) de la tête porte-lame (20) et l'organe de réception du corps d'appareil (10) autorisent deux positions relatives, décalées entre elles de 180°, de la tête porte-lame (20) et du corps d'appareil (10).

10. Appareil d'enlèvement d'isolation selon une des revendications 2 à 9, caractérisé en ce que la tête porte-lame (20) possède, en direction d'un câble coaxial mis en place, une plus grande largeur (D) que le corps d'appareil (10).

11. Appareil d'enlèvement d'isolation selon une des revendications 1 à 10, caractérisé en ce que la tête porte-lame (20) comporte, dans sa partie (21', 21") tournée vers l'étrier de retenue (13) agencé en forme de faîte de toiture, une forme complémentaire de celui-ci.

12. Appareil d'enlèvement d'isolation selon une des revendications 1 à 11, caractérisé en ce que l'étrier de retenue (13) est pourvu d'un bras allongé de guidage (13C), sur lequel s'accroche un organe de traction (40; 42; 42') rigide, manœuvrable de l'extérieur en vue d'appliquer, de façon non élastique, l'étrier de retenue (13) contre un conducteur (31) mis en place dans l'appareil et qui, à l'intérieur du corps d'appareil (10), est accroché par le bras de guidage (13C) de façon non élastique, irréversible et avec un effort de traction réglable.

13. Appareil d'enlèvement d'isolation selon la revendication 12, caractérisé en ce que l'organe de traction mécanique est une vis de traction (40) orientée dans la direction de traction (H) et qui coopère avec un trou fileté (13D'), solidaire du bras de guidage (13C) et orienté dans la même direction.

Fig.1

Fig.2

Fig.3

Fig.5

Fig.4

Fig.6a

Fig.6b